# EUROPÄISCHE PATENTSCHRIFT

(11) **EP 2 906 510 B1**
(45) Veröffentlichungstag und Bekanntmachung des Hinweises auf die Patenterteilung: **21.09.2016**
(21) Anmeldenummer: 13779540.7
(22) Anmeldetag: 10.10.2013
(51) Int. Cl.: C04B 7/52, C04B 7/02, C04B 7/04

(54) **VERFAHREN ZUR HERSTELLUNG VON ZEMENT**
PROCESS FOR PRODUCING CEMENT
PROCÉDÉ DE PRODUCTION DE CIMENT

(30) Priorität: 13.10.2012 DE 102012020160
(43) Veröffentlichungstag der Anmeldung: 19.08.2015
(73) Patentinhaber: KHD Humboldt Wedag GmbH, 51067 Köln (DE)
(72) Erfinder: JESCHINOWSKI, Hans-Peter, 53721 Siegburg (DE)
(86) Internationale Anmeldenummer: PCT/EP2013/071120
(87) Internationale Veröffentlichungsnummer: WO 2014/057016

(56) Entgegenhaltungen:
- EP-A1- 0 549 135
- EP-A2- 0 801 987
- DE-A1- 3 915 432
- DE-A1- 10 333 361
- HARDER J: "Grinding trends in the cement industry", ZKG INTERNATIONAL, BAUVERLAG BV., GETERSLOH, DE, Bd. 63, Nr. 4, 1. April 2010 (2010-04-01), Seiten 46-58, XP001561503, ISSN: 0949-0205

## Beschreibung

Die Erfindung betrifft ein Verfahren zur Herstellung von Zement unter Vermahlung von Zementklinker und Sulfatträger, wobei der Sulfatträger bevorzugt Gips ist.

Das Erstarrungsverhalten von Zementen wird durch die Zugabe von einem Sulfatträger zum Zementklinker eingestellt, wobei der Zementklinker Hauptbestandteil von Zement ist. Als Sulfatträger wird bei der Zementvermahlung in der Regel Gips eingesetzt, der üblicherweise zu etwa 5 Gew.% der Gesamtzementmischung beigemengt ist. Um den fertigen Zement zu erhalten, wird Zementklinker oder eine Mischung aus Zementklinker und weiteren Additiven gemeinsam mit Gips zum fertigen Zement vermahlen. Zum Vermahlen übliche Mahlsysteme sind Kugelmühlen, Gutbettwalzenmühlen und Vertikalmühlen, die im Mahl-Sichtkreislauf den fertigen Zement herstellen.

Um das Erstarrungsverhalten des fertigen Zementes einzustellen, wird der Gips, der chemisch als Dihydrat (CaSO₄ • 2H₂O) vorliegt, durch entsprechende Aufheizung und Abspaltung von Hydratwasser zu sogenanntem Halbhydrat (CaSO₄ • 1/2 H₂O) umgewandelt.

Um eine ausreichende Umwandlung von Gips zu Halbhydrat, dem Bassanit, zu erreichen, ist es notwendig, das Mahlgut auf etwa 100°C - 120°C zu erwärmen. Für die Dehydratisierung benötigt der Gips eine gewisse Zeit. Aus diesem Grund hat nicht nur die Temperatur, sondern auch noch die Verweilzeit des Gipses im Mahlsystem während der Vermahlung Einfluss auf die Umwandlung des Gipses zu Halbhydrat. In der Regel erfolgt die Erwärmung des Mahlguts aus Zementklinker gegebenenfalls weiteren Additiven und Gips durch die in dem Zementklinker enthaltene Wärme, wenn der Zement direkt nach dem Brennen des Zementklinkers hergestellt wird. Sofern zur Vermahlung Kugelmühlen eingesetzt werden, genügt die beim Mahlen entstehende Wärme, um die Dehydratisierung des Gipses zu Halbhydrat zu unterhalten, so dass der Zement, auch wenn der Bestandteil Zementklinker zwischengelagert wurde oder gar erst in einem weiteren Werk zu fertigem Zement vermahlen wird, nicht erwärmt werden braucht. Inzwischen werden zur Mahlung von Zement Gutbettwalzenmühlen oder Hochdruckwalzenmühlen eingesetzt oder auch Vertikalmühlen, die durch ihre scherungsfreie oder zumindest scherungsarme Zerkleinerung mit besonders hoher Effizienz das Mahlgut zerkleinern. Durch die scherungsfreie oder zumindest scherungsarme Zerkleinerung wird das Mahlgut bei der Vermahlung kaum aufgeheizt. Die geringe Aufheizung des Mahlguts ist einerseits der Energieeffizienz des Mahlsystems zuzuschreiben und auch der sehr kurzen Verweildauer des Mahlguts in der Gutbettwalzenmühle oder der Vertikalmühle. Es ist daher notwendig, bei Einsatz dieser Mühlen das Mahlgut zur Herstellung des fertigen Zements mit der gewünschten Menge Halbhydrat aufzuheizen. Diese Aufheizung wird in der Regel durch die Einleitung von Abgasen aus der thermischen Linie von Zementproduktionsanlagen erreicht. Sofern der Zementklinker aber nach dessen Brand zwischengelagert wurde oder der fertige Zement in einer anderen Anlage gemahlen wird, steht diese günstige Wärmequelle nicht mehr zur Verfügung. Das Mahlgut muss daher kostenaufwändig erhitzt werden. Der Vorteil der energieeffizienten Vermahlung wird so zum Teil wieder durch die notwendige Aufheizung aufgezehrt.

In der Deutschen Offenlegungsschrift DE10333361A1 wird ein Verfahren zur Herstellung von Zement offenbart, in welchem ausgehend vom Problem der nicht reproduzierbaren Entwässerung von Gips bei der Vermahlung von Sulfatträger mit heißem Zementklinker oder beim Einsatz von Kugelmühlen vorgeschlagen wird, den Sulaftträger und den Zementklinker getrennt voneinander zu zerkleinern. Dabei soll der Gips in der getrennten Vermahlung entwässert werden. Bei der getrennten Vermahlung kann der Gips in der Mühle zu stark erwärmt werden und zumindest teilweise bis zum unerwünschten Anhydrit entwässert werden.

In der Deutschen Offenlegungsschrift DE3915432A1 wird ein Verfahren zum gemeinsamen Vermahlen von Zementklinker mit Gips offenbart, wobei rezirkuliertes Grobgut dem Aufgabegut beigefügt wird, um die im Kreislauf befindliche Wärme im Umlauf zu erhalten. Die im Umlauf befindliche Wärme hilft, den Gips zu dehydratisieren. Bei der gemeinsamen Vermahlung von Zementklinker mit Gips muss der Zementklinker ebenfalls erhitzt werden, wodurch die notwendige Wärme bis zur Erreichung der Dissoziationstemperatur sehr groß ist und größtenteils zur Erwärmung des mengenmäßig höheren Zementklinkers aufgewendet wird.

In der Europäischen Offenlegungsschrift EP0549135A1 wird ein Verfahren zum gemeinsamen Vermahlen von Zementklinker mit Gips in einer Rollenmühle offenbart, wobei zur Vermeidung einer Überhitzung und damit zur Dehydrierung bis zum Anhydrit Wasser der Kugelmühle beigegeben wird. Die Eindüsung von Wasser führt allerdings zur teilweisen, unerwünschten Reaktion des Zementklinkers, der damit reaktionsträger wird.

In der Europäischen Offenlegungsschrift EP0801987A1 wird ein Verfahren zum gemeinsamen Vermahlen von Zementklinker mit Gips in einer Vertikalmühle offenbart, bei welchem ein Tell des Mahlguts der Vertikalmühle ungesichtet und damit ungekühlt wieder aufgegeben wird, um Wärme in dem Mahlprozess zu halten. Die gemeinsame Erwärmung von Zementklinker und Gips erfordert jedoch eine sehr große Wärmemenge, um den Zementklinker zu erwärmen. Diese Wärme steht nicht für die Dehydratisierung von Gips zur Verfügung.

In dem Fachzeitschriftenartikel von J. Harder, "Grinding trends in the cement industry", ZKG International, Bauverlag BV., Gütersloh, DE, Bd. 63, Nr. 4, 1. April 2010, Seiten 46-58 wird eine Übersicht über die aktuellen Mahlverfahren in der Zementindustrie gegeben.

Aufgabe der Erfindung ist es, ein Verfahren zur Vermahlung Zement zur Verfügung zu stellen, bei dem die Nachteile aus dem Stand der Technik überwunden werden.

Die der Erfindung zugrunde liegende Aufgabe wird erfüllt durch ein getrenntes Vermahlen von Zementklinker und Sulfatträger, wobei ausschließlich der Sulfatträger im Umlauf erhitzt wird, wobei der im Kreislauf befindliche Sulfatträger im Kreislauf bis kurz vor dessen Dissoziätionstemperatur auf etwa 100°C bis 120°C erhitzt und die Dissoziationstemperatur von 120°C bis 130°C durch Vermahlung erreicht wird. Weitere vorteilhafte Ausgestaltungen sind in den Unteransprüchen angegeben.

Erfindungsgemäß wird vorgeschlagen, dass unter Nutzung einer Gutbettwalzenmühle oder Hochdruckwalzenmühle oder einer Vertikalmühle, allgemein solcher Mühlen, die ohne oder mit nur geringer Scherkraft arbeiten, zwei Mahlkreisläufe unterhalten werden, wobei ein erster Mahlkreislauf den Zementklinker mit gegebenenfalls vorhandenen Additiven zerkleinert und ein zweiter Mahlkreislauf den Gips zerkleinert. Von diesen beiden Mahlkreisläufen erfährt nur der Mahlkreislauf eine zusätzliche Erwärmung, der den Sulfatträger in Form von Gips zerkleinert. Da das Mischungsverhältnis zwischen Zementklinker und Gips in der Regel um 5% Gips und um 95% Zementklinker liegt, kann durch die Getrenntvermahlung bis zu etwa 95% der Heizenergie zum Dehydratisieren von Gips zu Halbhydrat eingespart werden. Freilich wird diese Ersparnis durch eine doppelt vorzuhaltende Mahlkreislaufführung erkauft. Die Ersparnisse aufgrund des geringeren Energieverbrauchs können aber die doppelt vorzuhaltenden Mahlkreisläufe kompensieren. Beispielsweise wird in der DE 10 2008 019 830 A1 ein Kreislaufmahlsystem offenbart, das dazu in der Lage ist, innerhalb derselben Anlage zwei Mahlkreisläufe zu unterhalten, oder diese zumindest voneinander zu trennen. Um das fertige Zementprodukt zu erhalten, kann die Mischung der Komponenten in einem gemeinsamen Entstauber vorgenommen werden, wo die Komponenten im Zyklon vermischt und von der Trägerluft befreit werden. Wichtig bei der getrennten Vermahlung ist, dass die Abluft des Mahlsystems zur Zerkleinerung des Sulfatträgers verworfen wird, da sie die Hydratfeuchtigkeit aus der Umwandlung von Gips zu Halbhydrat mit sich trägt. Diese Hydratfeuchtigkeit soll in die Atmosphäre entweichen und nicht durch den Zementklinker aufgenommen werden.

Je nach Vorhandensein kann zur Aufheizung des Mahlkreislaufes für Gips die Abluft der thermischen Linie einer Anlage zur Herstellung von Zement verwendet werden. In dieser Konfiguration kann die eingesparte Abwärme in einer Anlage zur Herstellung von Zement zur Trocknung von Rohmehl, zur Trocknung von Biomaterial als Brennstoff und/oder zur Erzeugung von elektrischer Energie verwendet werden. Wenn hingegen die thermische Linie zur Herstellung von Zement nicht in der Nähe verfügbar ist, dann ist es auch möglich, die notwendige Wärme zur Dehydratisierung des Gipses zu Halbhydrat mit Hilfe eines Brenners in den Kreislauf der Vermahlung des Sulfatträgers einzuführen. Bei der Erhitzung des Rohmaterials ist es notwendig, die thermische Energie in einem solchen Maß einzuführen, dass der Kreislauf die Temperatur zur Dissoziation des Gipses zu Halbhydrat erreicht. Diese Dissoziationstemperatur liegt bei 120°C bis 130°C. Beim Erwärmen des Mahlguts genügt es aber, wenn die Mahlkreislauftemperatur nur bis 100°C - 120°C erwärmt wird, weil die Restwärme in Form von Mahlenergie in den Gips eingetragen wird. Sofern mehr Wärmeenergie in den Gips eingetragen wird, erhitzt sich dieser möglicherweise bis zur nächsten Dissoziationstemperatur von 190°C, wo das Halbhydrat in Anhydrit (CaSO₄ •0 H₂O) totgebrannt wird. Zwar ist auch Anhydrit ein bekanntes Additiv zur Kontrolle der Erstarrung von Zement, jedoch steht vorliegend die Erzeugung von Halbhydrat im Vordergrund.

Nach der Erfindung ist vorgesehen, dass der gemahlene Sulfatträger und der gemahlene Zementklinker erst nach deren Vermahlung zu einer Zementmischung vereint werden. Die Vereinigung der Mahlstäube kann in einem Zyklon vorgenommen werden, wo die Mahlstäube innig miteinander gemischt und von der Trägerluft befreit werden.

Die Erfindung wird anhand der folgenden Figuren näher erläutert.

Es zeigt:
- Figur 1: Stand der Technik mit gemeinsamer Vermahlung von Zementklinker und Sulfatträger in Form von Gips,
- Figur 2: erfindungsgemäße, getrennte Vermahlung von Zementklinker und Sulfatträger in Form von Gips.

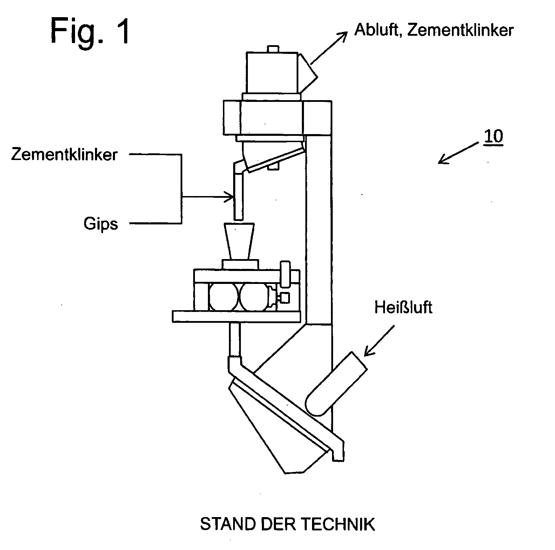

In Figur 1 ist der Stand der Technik dargestellt, in welchem sowohl Zementklinker als Calciumsilikat verschiedener Stöchiometrie wie auch Gips (CaSO₄ • 2 H₂O) gemeinsam in eine Kreislaufmahlanlage 10 aufgegeben werden. Die hier beispielhaft skiziirte Mahlanlage umfasst einen pneumatischen Kreislauf, und eine Gutbettwalzenmühle oder Hochdruckwalzenmühle. Das Mahlgutgemisch aus Gips (CaSO₄ • 2 H₂O) und Zementklinker wird gemeinsam in einer Gutbettwalzenmühle oder Hochdruckwalzenmühle unter geringer Scherwirkung durch eine Hochdruckzerkleinerung zerkleinert. Da die Hochdruckzerkleinerung sehr energieeffizient arbeitet und auch, weil die Verweilzeit des Mahlguts in der Gutbettwalzenmühle oder Hochdruckwalzenmühle sehr kurz ist, heizt sich das Mahlgut nur geringfügig auf, zumindest aber reicht die Aufheizung nicht, die Dissoziationstemperatur des Gipses (CaSO₄ 2 H₂O) zu Halbhydrat (CaSO₄ • 1/2 H₂O) und Wasser (1,5 H₂O) zu erreichen. Daher wird als Trägergas in der Kreislaufmahlanlage 10 Heißluft verwendet, die in der Nähe einer thermischen Linie einer Anlage zur Herstellung von Zementklinker als heiße Abluft verfügbar ist. Wird der Zement jedoch in einem Werk durch Mahlen erzeugt, wo keine thermische Linie zur Herstellung von Zementklinker zur Verfügung steht, muss die Heißluft durch Brenner erzeugt werden. Dabei nimmt der Zementklinker, der etwa 95% des fertigen Zements ausmacht, den größten Teil der mit der Heißluft eingebrachten Wärme auf.

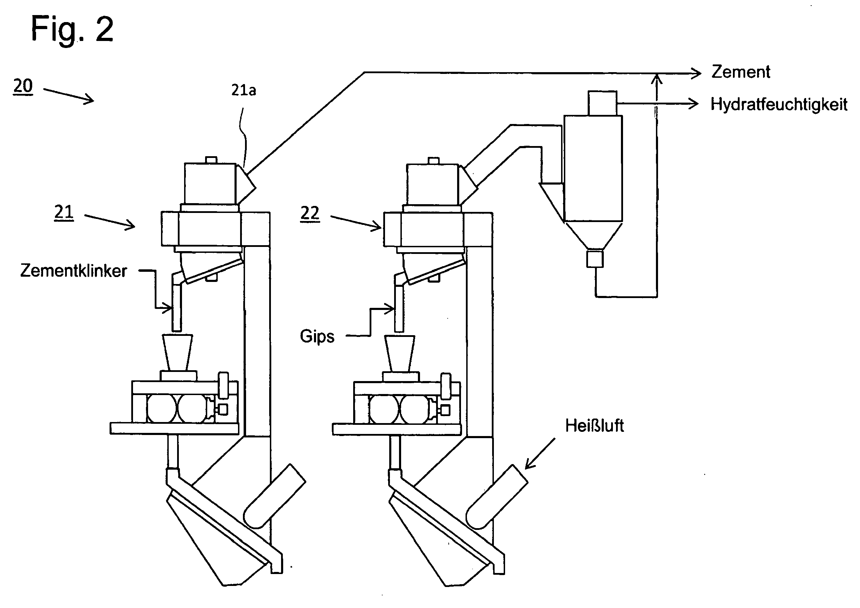

In Figur 2 ist daher eine doppelte Kreislaufmahlanlage 20 zur Durchführung des erfindungsgemäßen Verfahrens zur Herstellung von Zement dargestellt. In Figur 2 ist nur zur Verdeutlichung dargestellt, dass der Zementklinker in einer ersten Kreislaufmahlanlage 21 zerkleinert wird, wobei der gemahlene Zementklinker gemeinsam mit der Trägerluft die erste Kreislaufmahlanlage bei Auslass 21a verlässt. In einer hier zur Verdeutlichung eingezeichneten, zweiten Kreislaufmahlanlage 22 wird Gips (CaSO₄ 2 H₂O) gemahlen, wobei in diese Kreislaufmahlanlage Heißluft als Trägerluft eingeblasen wird. Diese Heißluft erwärmt den im Kreislauf befindlichen Gips (CaSO₄ 2 H₂O) bis kurz vor dessen Dissoziationstemperatur auf etwa 100°C - 120°C. Durch die Vermahlung wird die tatsächliche Dissoziationstemperatur von 120°C - 130°C erreicht, bei welcher Gips (CaSO₄ 2 H₂O) Hydratwasser abspaltet und in das Halbhydrat (CaSO₄ • 1/2 H₂O) übergeht. Aus der Kreislaufmahlanlage 22 zur Zerkleinerung und Dehydratisierung von Gips (CaSO₄ · 2 H₂O) zu Halbhydrat (CaSO₄ • 1/2 H₂O) entweicht sowohl die feuchte Trägerluft als Mühlenabluft in Form von Hydratfeuchtigkeit und auch das Halbhydrat (CaSO₄ • 1/2 H₂O). Die feuchte Mühlenabluft wird entweder entsorgt oder an anderer Stelle weiter verwendet, hingegen wird der Halbhydratstrom dem gemahlenen Zementklinker zugeführt, wo sich dann eine Mischung aus gemahlenem Zementklinker und Halbhydrat (CaSO₄ • 1/2 H₂O) bildet, was den fertigen Zement ergibt.

Zur getrennten Vermahlung ist es nicht unbedingt notwendig, zwei voneinander unabhängige Kreislaufmahlanlagen vorzuhalten. Es ist auch möglich, eine Kreislaufmahlanlage im Wechselbetrieb zu unterhalten, wobei in einem ersten Betriebszustand Zementklinker gemahlen wird und in einem zweiten Betriebszustand wird Gips unter Verwendung von Heißluft gemahlen. Es ist aber auch möglich, innerhalb derselben Anlage eine getrennte Führung von Zementklinker und Gips zu unterhalten, wobei nur der in die Anlage eingeführte Gips mit Heißluft versehen wird. Als Mahlanlagen kommen nach der Erfindung Gutbettwalzenmühlen oder Hochdruckwalzenmühlen in Betracht, aber auch Vertikalmühlen.

### BEZUGSZEICHENLISTE

- 10: Kreislaufmahlanlage
- 20: doppelte Kreislaufmahlanlage
- 21: Kreislaufmahlanlage
- 21a: Auslass
- 22: Kreislaufmahlanlage

## Patentansprüche

1. Verfahren zur Herstellung von Zement unter Vermahlung von Zementklinker und Sulfatträger, wobei der Sulfatträger Gips ist, wobei
der Zementklinker und der Gips in einer Gutbettwalzenmühle und/oder Vertikalmühle getrennt voneinander vermahlen werden,
**dadurch gekennzeichnet, dass**
ausschließlich der Sulfatträger im Umlauf erhitzt wird, wobei
der im Kreislauf befindliche Sulfatträger im Kreislauf bis kurz vor dessen Dissoziationstemperatur auf etwa 100°C bis 120°C erhitzt und
die Dissoziationstemperatur von 120°C bis 130°C durch Vermahlung erreicht wird.

2. Verfahren nach Anspruch 1,
**dadurch gekennzeichnet, dass**
der Sulfatträger durch Abgase der thermischen Linie einer Anlage zur Herstellung von Zement erhitzt wird.

3. Verfahren nach Anspruch 2,
**dadurch gekennzeichnet, dass**
der Sulfatträger bis zu einer Dissoziationstemperatur des Dihydrats zum Halbhydrat erhitzt wird.

4. Verfahren nach einem er Ansprüche 1 bis 3,
**dadurch gekennzeichnet, dass**
der Sulfatträger mit dem Zementklinker nach getrennter Vermahlung vereint wird.

5. Verfahren nach einem der Ansprüche 1 bis 4,
**dadurch gekennzeichnet, dass**
Mühlenabluft der Zerkleinerungsanlage für den Sulfatträger verworfen wird.

## Claims

1. Process for producing cement by grinding cement clinker and a sulfate source, wherein the sulfate source is gypsum, wherein
the cement clinker and the gypsum are ground separately in a high-pressure grinding roller press mill and/or vertical roller mill,
**characterized in that**
exclusively the sulfate source is heated in circulation, wherein
the sulfate source in the circuit is heated to just below the dissociation temperature thereof to about 100°C to 120°C in the circuit and
the dissociation temperature of 120°C to 130°C is achieved by grinding.

2. Process according to Claim 1,
**characterized in that**
the sulfate source is heated by offgases from the thermal line of a plant for producing cement.

3. Process according to Claim 2,
**characterized in that**
the sulfate source is heated to a dissociation temperature of the dihydrate to the hemihydrate.

4. Process according to any of Claims 1 to 3, **characterized in that**
after separate grinding the sulfate source is combined with the cement clinker.

5. Process according to any of Claims 1 to 4, **characterized in that**
mill exhaust air from the comminution plant for the sulphate source is discarded.

## Revendications

1. Procédé de fabrication de ciment par broyage de clinker de ciment et d'un support sulfate, le support sulfate étant le gypse, selon lequel
le clinker de ciment et le gypse sont broyés séparément l'un de l'autre dans un broyeur à cylindres à lit de matériau et/ou un broyeur vertical,
**caractérisé en ce que**
exclusivement le support sulfate est chauffé dans le circuit,
le support sulfate se trouvant dans le circuit étant porté à une température d'environ 100 °C à 120 °C dans le circuit jusqu'à peu avant sa température de dissociation, et
la température de dissociation de 120 °C à 130 °C étant atteinte par broyage.

2. Procédé selon la revendication 1, **caractérisé en ce que** le support sulfate est chauffé par des gaz d'échappement de la ligne thermique d'une unité pour la fabrication de ciment.

3. Procédé selon la revendication 2, **caractérisé en ce que** le support sulfate est chauffé jusqu'à une température de dissociation du dihydrate en semi-hydrate.

4. Procédé selon l'une quelconque des revendications 1 à 3, **caractérisé en ce que** le support sulfate est réuni avec le clinker de ciment après le broyage séparé.

5. Procédé selon l'une quelconque des revendications 1 à 4, **caractérisé en ce que** l'air d'échappement du broyage de l'ûnité de broyage pour le support sulfate est rejeté.
